# EUROPÄISCHE PATENTSCHRIFT

(11) **EP 2 628 668 B1**
(45) Veröffentlichungstag und Bekanntmachung des Hinweises auf die Patenterteilung: **10.09.2014**
(21) Anmeldenummer: 13152398.7
(22) Anmeldetag: 23.01.2013
(51) Int. Cl.: B62J 1/00

(54) **Fahrradsattel**
Bicycle saddle
Selle de vélo

(30) Priorität: 16.02.2012 DE 202012001583 U
(43) Veröffentlichungstag der Anmeldung: 21.08.2013
(73) Patentinhaber: RTI Sports Vertrieb von Sportartikeln GmbH, 56070 Koblenz (DE)
(72) Erfinder: Müller, Michael, 56427 Siershahn (DE); Krause, Andreas, 56068 Koblenz (DE)
(74) Vertreter: Von Kreisler Selting Werner - Partnerschaft von Patentanwälten und Rechtsanwälten mbB

(56) Entgegenhaltungen:
- WO-A1-02/10008
- US-B1- 6 957 857

## Beschreibung

Die Erfindung betrifft einen Fahrradsattel, insbesondere einen Sport-Fahrradsattel.

Bei Fahrradsätteln, insbesondere Fahrradsättel, die im sportlichen Bereich eingesetzt werden, besteht stets die Forderung, dass der Sattel einerseits möglichst leicht ist, und andererseits eine hohe Eigenflexibilität aufweist. Durch die Eigenflexibilität wird der Fahrcomfort verbessert. Diese Forderung besteht insbesondere bei Sätteln für Rennräder und ungefederten Mountainbikes. Wünschenswert ist eine Eigenflexibilität jedoch auch bei anderen Einsatzgebieten.

In WO 02/10008 ist ein Sattel beschrieben mit mehreren Versteifungsrippen an dessen Unterseite. Hierbei folgen die ersten beiden Versteifungsrippen im Wesentlichen der Form der Sattelrückseite. Die dritte Versteifungsrippe verläuft vom Vorderteil des Sattels in den Sitzbereich des Sattels. Die drei Versteifungsrippen sind durch mehrere laterale Versteifungsrippen miteinander verbunden.

In US 6,957,857 wird ein Fahrradsattel beschrieben mit einer umlaufenden Versteifungsrippe, die vom vorderen Aufnahmeelement zum hinteren Aufnahmeelement verläuft. Weiter sind an der Oberseite des Sattels quer zur Sattellängsrichtung angeordnete Versteifungsrippen vorgesehen.

Aufgabe der Erfindung ist es, einen Fahrradsattel, insbesondere einen Sport-Fahrradsattel, zu schaffen, der eine hohe Eigenflexibilität aufweist. Ferner soll bei ausreichender Stabilität das Gewicht des Sattels gering sein.

Die Lösung der Aufgabe erfolgt erfindungsgemäß durch die Merkmale des Anspruchs 1.

Der erfindungsgemäße Fahrradsattel weist eine insbesondere aus Kunststoff hergestellte Sattelschale auf. An einer Satteloberseite ist ein Sitzelement wie ein Sitzpolster angeordnet. Das Sitzelement kann beispielsweise aus Polster- und/oder Gelmaterial hergestellt und von einer insbesondere aus Kunststoff hergestellten Folie überspannt bzw. durch diese fixiert sein. Im Bereich einer Sattelspitze der Sattelschale, d.h. bei dem im montierten Zustand in Fahrtrichtung weisenden Bereich des Sattels, ist ein vorderes Aufnahmeelement zur Verbindung mit einem Sattelgestell angeordnet. Entsprechend ist an einer Rückseite der Sattelschale ein hinteres Aufnahmeelement für das Sattelgestell angeordnet. Insbesondere sind die hinteren Aufnahmen nicht unmittelbar an der Unterseite der Sattelschale, sondern an einem den hinteren Rand der Sattelschale ausbildenden Falz angeordnet. Hierdurch wird die Eigenflexibilität in diesem Bereich weiter verbessert. Um eine möglichst dünne und somit leichte und flexible Sattelschale vorsehen zu können, sind an einer Sattelunterseite Versteifungsrippen vorgesehen. Durch das erfindungsgemäße Vorsehen von Versteifungsrippen kann bei Vorsehen einer sehr dünnen Sattelschale eine ausreichende Stabilität erreicht werden. Gleichzeitig kann hierdurch eine hohe Eigenflexibilität der Sattelschale erzielt werden.

Durch das erfindungsgemäße Vorsehen von Versteifungsripppen ist es möglich eine in Seitenansicht flache Sattelschale auszugestalten. Dies bewirkt nicht nur eine Gewichtsersparnis sondern auch einen sportlichen Gesamteindruck.

Bei dem erfindungsgemäßen Fahrradsattel weist die Sattelschale einen verbreiterten Sitzteil und ein schmales Vorderteil auf. Das Sitzteil bildet hierbei den in Fahrtrichtung hinteren Teil des Sattels aus, auf dem der Benutzer insbesondere mit den Sitzhöckern sitzt. Der Vorderteil bildet sodann die Sattelspitze aus, wobei der Übergang zwischen Sitzteil und Vorderteil als stetiger geschwungener Übergang ausgebildet ist.

Erfindungsgemäß sind erste Versteifungsrippen an der Sattelunterseite vorgesehen, die von dem hinteren zum vorderen Aufnahmeelement verlaufen. Die ersten Versteifungsrippen verlaufen somit im Wesentlichen in Längsrichtung des Sattels bzw. bei montiertem Sattel in Fahrtrichtung.

Erfindungsgemäß sind zusätzlich zweite Versteifungsrippen vorgesehen. Die zweiten Versteifungsrippen erstrecken sich von dem Übergangsbereich zwischen dem Sitzteil und dem Vorderteil der Sattelschale in den Vorderteil hinein.

Vorzugsweise sind die Versteifungsrippen derart angeordnet, dass sie im Wesentlichen in Richtung der Krafteinleitung der Sattelschale verlaufen. Die Krafteinleitung in die Sattelschale erfolgt insbesondere im Bereich der vorderen und der hinteren Aufnahmeelemente über das Sattelgestell. Ferner erfolgt eine Krafteinleitung in die Sattelschale im Bereich der Sitzhöcker des Fahrers.

Vorzugsweise verlaufen die ersten Versteifungsrippen im Randbereich der Sattelschale, insbesondere verlaufen die ersten Versteifungsrippen in einem im Wesentlichen konstanten Abstand zu der Außenkante der Sattelschale. Beispielsweise verlaufen die ersten Versteifungsrippen ausgehend von der Sattelrückseite in einem Abstand von 5 mm - 10 mm zu den Außenkanten der Sattelschale bis zur Sattelspitze.

In bevorzugter Ausbildungsform des erfindungsgemäßen Fahrradsattels sind dritte Versteifungsrippen vorgesehen. Die dritten Versteifungsrippen sind erfindungsgemäß in bevorzugter Ausführungsform zumindest teilweise im Übergangsbereich zwischen dem Sitzteil und dem Vorderteil angeordnet. Vorzugsweise erstrecken sich die drittenVersteifungsrippen im Wesentlichen in Sattellängsrichtung. Durch das Vorsehen von drittenVersteifungsrippen im Übergangsbereich kann die Stabilität der Sattelschale in diesem Bereich erheblich verbessert werden. Untersuchungen haben gezeigt, dass durch die erfindungsgemäß verbesserte Sattelschale mit hohem Eigenflex in diesem Bereich zuerst Materialermüdungen auftreten. Diese können durch das Vorsehen der dritten Versteifungsrippen im Übergangsbereich erheblich reduziert werden. Das Vorsehen der dritten Versteifungsrippen ist erfindungsgemäß unabhängig davon, ob erste Versteifungsrippen vorgesehen sind. Die Bezeichnung als dritte Versteifungsrippen dient nur zur klaren Abgrenzung gegenüber den ersten Versteifungsrippen.

Besonders bevorzugt ist es hierbei, dass die dritten Versteifungsrippen im Übergangsbereich mit den ersten Versteifungsrippen zusammengeführt sind. Sofern die ersten Versteifungsrippen im Wesentlichen parallel in konstantem Abstand zu der Außenkante verlaufen, weisen die ersten Versteifungsrippen im Übergangsbereich eine nach innen führende Kurve auf, um sodann im Vorderteil der Sattelschale wieder im Wesentlichen in Längsrichtung des Sattels zu verlaufen. Bevorzugt ist es hierbei, dass die dritten Versteifungsrippen mit den ersten Versteifungsrippen im Bereich der nach innen führenden Kurve der ersten Versteifungsrippen mit diesen verbunden sind.

Vorzugsweise sind die zweiten Versteifungsrippen zu einer gemeinsamen Versteifungsrippe zusammengeführt, wobei sich die zweiten Versteifungsrippen hierbei vorzugsweise, ausgehend von den ersten Versteifungsrippen bezogen auf die Sattelbreite, nach innen bzw. in Richtung der Sattelmitte erstrecken und sodann Y-artig zusammengeführt sind. In den Bereichen, in denen die zweiten Versteifungsrippen zusammengeführt sind, weisen diese vorzugsweise eine größere Breite auf.

In den Bereichen, in denen die erste Versteifungsrippe mit der jeweils zweiten und/oder dritten Versteifungsrippe zusammengeführt ist, ist die Versteifungsrippe vorzugsweise verdickt ausgebildet. Vorzugsweise erstreckt sich diese Verdickung von der Zusammenführung mit der jeweils zweiten Versteifungsrippe bis zur Zusammenführung mit der jeweils dritten Versteifungsrippe, so dass zwischen den Versteifungsrippen fließende Übergänge realisiert sind.

In den nicht verdickten Bereichen weisen die Versteifungsrippen in Draufsicht eine Breite von ca. 1 mm - 3 mm auf. Im Bereich der Verdickungen kann die Breite 4 mm - 7 mm aufweisen.

Insbesondere durch einzelne oder die Kombination vorstehend beschriebener Anordnungen der Versteifungsrippen kann eine homogene Eigenflexibilität über die gesamte Sattellänge erzielt werden. Eine Funktion der Eigenflexibilität über der Sattellänge weist somit keine oder allenfalls geringe Sprünge bzw. Stufen auf. Insbesondere durch die vorstehend beschriebenen bevorzugten Ausgestaltungen der Versteifungsrippen im Übergangsbereich zwischen dem Sitzteil und dem Vorderteil kann ein Bruch der Sattelschale in diesem stark belasteten Bereich vermieden werden, wobei gleichzeitig eine gewünschte Flexibilität in diesem Bereich erzielt ist.

Sofern die Versteifungsrippen freie Rippenenden aufweisen, was in bevorzugter Weise bei den zweiten und dritten Versteifungsrippen der Fall ist, gehen diese stufenlos in die Sattelunterseite über. Hierdurch ist das Auftreten von Kerbwirkungen vermieden.

Besonders bevorzugt ist es, dass die Versteifungsrippen derart angeordnet sind, dass sie der Richtung der eingeleiteten Kräfte folgen. Die Struktur der Versteifungsrippen ist hierbei vorzugsweise verzweigt ausgebildet.

Um die Eigenflexibilität des Sattels, insbesondere der Sattelschale, weiter zu verbessern, ist es besonders bevorzugt, dass das hintere Aufnahmeelement mit einer Schalen-Rückseite verbunden ist. Das hintere Aufnahmeelement zur Aufnahme des Sattelgestells ist somit vorzugsweise nicht an der Unterseite des Sitzteils, sondern an der Schalen-Rückseite angeordnet. Hierzu ist es bevorzugt, dass die Schalen-Rückseite einen nach unten weisenden Versteifungsrand aufweist. Das hintere Aufnahmeelement ist vorzugsweise mit dem Versteifungsrand verbunden bzw. im Bereich des Versteifungsrandes mit der Sattelschale verbunden. Besonders bevorzugt ist es hierbei, dass das hintere Aufnahmeelement zwei Aufnahmen aufweist, die in einem Abstand zueinander mit der Schalen-Unterseite im Bereich des Versteifungsrandes verbunden sind. Vorzugsweise gehen die ersten Versteifungsrippen jeweils von den beiden Aufnahmen aus, da in diesem Bereich eine wesentliche Krafteinleitung stattfindet. Hierbei verlaufen die hinteren Aufnahmeelemente in bevorzugter Ausführungsform schräg nach vorne, sodass das Sattelgestell im Bereich der Aufnahmeelemente koaxial ist.

Bei einer weiteren bevorzugten Ausführungsform sind an der Schalen-Unterseite im Bereich der Sitzhöckerauflage Ausbuchtungen vorgesehen. Hierdurch ist die Krafteinleitung über die Sitzhöcker in die Sattelschale verbessert. Ferner ist es hierdurch möglich, in diesem besonders druckempfindlichen Bereich eine verbesserte Polsterung, beispielsweise durch Vorsehen von Gelkissen, auszubilden. Die Ausbuchtungen weisen hierbei vorzugsweise eine in Längsrichtung des Sattels elliptische Ausgestaltung auf. Besonders bevorzugt ist es, dass die dritten Versteifungsrippen mit den Ausbuchtungen verbunden sind bzw. in diese übergehen.

Durch Vorsehen derartiger Ausbuchtungen kann der Sattel in Seitenansicht besonders flach ausgestaltet sein. Einerseits kann aufgrund des Vorsehens von Versteifungsrippen eine flache Sattelschale realisiert werden. Um eine flache Ausgestaltung bzw. eine flache Anmutung in Seitenansicht zu realisieren, muss jedoch eine möglichst dünne Polsterschicht vorgesehen sein. Durch Vorsehen der Ausbuchtungen im Bereich der Sitzhöckerauflage ist der Komfort trotz sehr dünner Polsterungen weiterhin gegeben. Das Polster weist hierbei vorzugsweise eine Dicke von weniger als 5 mm, insbesondere weniger als 3 mm auf und ist nur im Bereich der Ausbuchtungen entsprechend dicker. Im Bereich der Ausbuchtungen kann das Polster sodann mehr als 8 mm, insbesondere mehr als 10 mm Dicke aufweisen. Eine schlanke bzw. flache Anmutung des Sattels in Seitenansicht ist ferner dadurch realisiert, dass der hintere Bereich des Fahrradsattels in dem der Benutzer auf dem Sattel sitzt flach ausgebildet ist. Die quer zur Längsrichtung vorgesehene Wölbung des Sattels ist möglichst gering. Auch dies ist durch ein erfindungsgemäßes Vorsehen von Versteifungsrippen möglich, da bei herkömmlichen Sätteln eine Krümmung erforderlich ist, um die Kräfte entsprechend aufnehmen zu können. In besonders bevorzugter Ausführungsform ist der Sattel zumindest zwischen den Ausbuchtungen horizontal ausgebildet und weist allenfalls eine Abweichung von der Horizontalen von 1 bis 2 mm auf. Das Vorsehen von Ausbuchtungen ist insbesondere in Verbindung mit den dritten Versteifungsrippen bevorzugt. In sodann weiter bervorzugter Weiterbildung können zusätzlich die vorstehend beschriebenen ersten und/ oder zweiten Versteifungsrippen vorgesehen und vorzugsweise entsprechend der vorstehenden Beschreibung ausgebildet sein.

In besonders bevorzugter Ausführungsform ist die Sattelschale einschließlich der Versteifungsrippen und, sofern vorgesehen, einschließlich der Ausbuchtungen einstückig, insbesondere aus Kunststoffmaterial, hergestellt. Hierbei kann die Herstellung der Sattelschalen vorzugsweise im Kunststoff-Spritzgussverfahren erfolgen.

Nachfolgend wird die Erfindung anhand einer bevorzugten Ausführungsform unter Bezugnahme auf die anliegenden Zeichnungen näher erläutert.

Es zeigen:
- Figur 1: eine schematische Unteransicht des Sattels,
- Figur 2: eine schematische perspektivische Ansicht des Sattels und
- Figur 3: eine schematische Schnittansicht in Richtung der Linie III-III in Fig. 1.

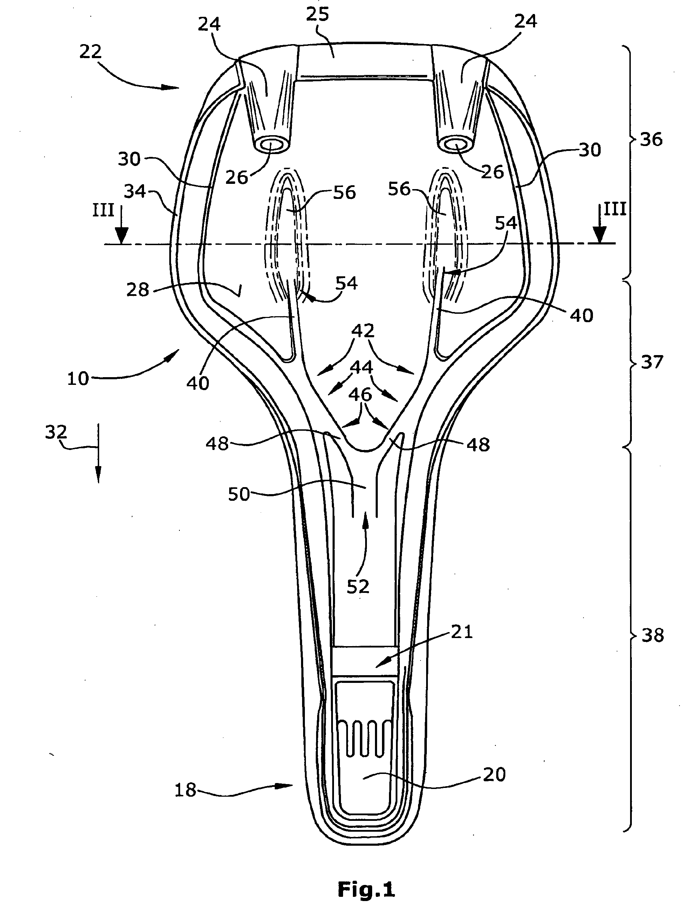

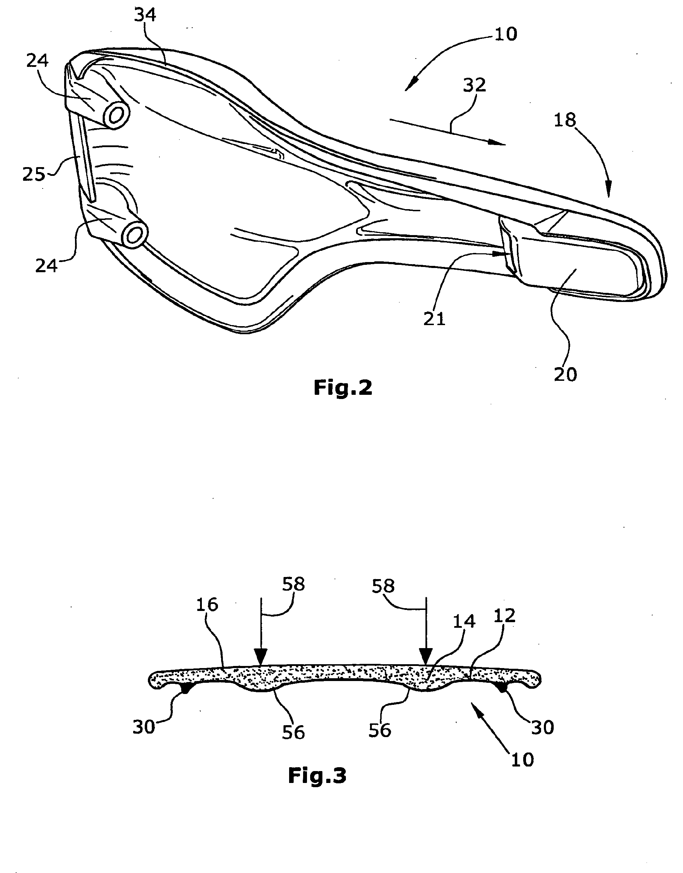

Der erfindungsgemäße Fahrradsattel, bei dem es sich insbesondere um einen Sport-Fahrradsattel mit geringem Gewicht und hoher Eigenflexibilität handelt, weist eine Sattelschale 10 auf. An einer Schalen-Oberseite 12 (Fig. 3) ist ein Sattelpolster 14 angeordnet, das beispielsweise auch Gelkissen aufweisen kann. Das Sattelpolster 14 ist von einer Folie oder anderen dünnen Schicht 16 überspannt und auf diese Weise an der Sattelschale 10 fixiert. Im Bereich einer Sattelspitze 18 (Fig. 1 und 2) ist ein vorderes Aufnahmeelement 20 vorgesehen, um den Sattel mit einem nicht dargestellten Sattelgestell zu verbinden. Hierbei kann das Aufnahmeelement 20 derart ausgebildet sein, dass die beiden Streben des Sattelgestells an einer Rückseite 21 in das Aufnahmeelement 20 eingeschoben werden. Ferner kann das Aufnahmeelement 20 zusätzlich als Stoßdämpfer ausgebildet sein, um den Komfort weiter zu verbessern.

Entsprechend ist im Bereich einer Sattel-Rückseite 22 ein hinteres Aufnahmeelement vorgesehen, das im dargestellten Ausführungsbeispiel zwei Aufnahmen 24 aufweist. Diese sind mit einem nach unten weisenden, mit der Sattelschale 10 verbundenen Versteifungsrand 25 verbunden und können wiederum mit dem Sattelgestell verbunden werden. Bei dem Sattelgestell handelt es sich beispielsweise um ein rohrförmiges Gestell, dessen Rohrenden in Öffnungen 26 der Aufnahmen 24 eingesteckt sind. In Draufsicht sind die beiden rohrförmigen Elemente des Sattelgestells S-förmig ausgebildet, so dass diese ähnlich der Sattelform ausgehend von den Aufnahmen 24 nach innen verlaufen und im Bereich der Sattelspitze zusammengeführt sind, um sodann gemeinsam an dem vorderen Aufnahmeelement mit der Sattelschale 10 verbunden zu werden.

Die Krafteinleitung in die Sattelschale 10 erfolgt im dargestellten Ausführungsbeispiel somit im Wesentlichen über die hinteren Aufnahmen 24 sowie das vordere Aufnahmeelement 20.

Erfindungsgemäß weist die Sattelschale 10 an der Sattel-Unterseite 28 mehrere Versteifungsrippen auf. Erste Versteifungsrippen 30 erstrecken sich in Sattellängsrichtung 32. Insbesondere gehen die ersten Versteifungsrippen 30 jeweils von den Aufnahmen 24 aus und verlaufen zu dem vorderen Aufnahmeelement 20. Die ersten Versteifungsrippen 30 verlaufen hierbei vorzugsweise im Wesentlichen parallel zu einer Schalenaußenkante 34. Der Abstand der ersten Versteifungsrippen 30 ist hierbei im Wesentlichen konstant zu der Schalenaußenkante 34.

Die Sattelschale 10 sowie auch der gesamte Sattel weisen einen Sitzteil 36 auf, der das wesentliche Gewicht des Benutzers aufnimmt. Der Sitzteil 36 geht in einen Vorderteil 38 über, der sodann auch die Sattelspitze 18 ausbildet. Der Übergangsbereich 37 zwischen dem Sitzteil 36 und dem Vorderteil 38 ist hierbei geschwungen ausgebildet. Entsprechend sind auch die ersten Versteifungsrippen 30, die parallel zur Außenkante 34 der Sattelschale verlaufen, in dem Übergangsbereich 37 nach innen geschwungen ausgebildet.

Bei der dargestellten bevorzugten Ausführungsform des erfindungsgemäßen Sattels sind zusätzlich dritte Versteifungsrippen 40 vorgesehen. Diese sind in demjenigen Randbereich des Sitzteils 36 angeordnet, der in Richtung des Vorderteils 38 weist. Da es sich bei diesen beiden Bereichen um nicht klar voneinander trennbare Bereiche handelt, die fließend ineinander übergehen, können die dritten Versteifungsrippen 40 auch derart angeordnet sein, dass sie in dem Übergangsbereich 37 zwischen dem Sitzteil 36 und dem Vorderteil 38 angeordnet sind. Die dritten Versteifungsrippen 40 verlaufen im Wesentlichen in Sattellängsrichtung 32. Die dritten Versteifungsrippen 40, die in dem Übergangsbereich 37 zwischen dem Sitzteil 36 und dem Vorderteil 38 angeordnet sind, gehen in die ersten Versteifungsrippen 30 über. Ein Bereich 42 zwischen den ersten und den dritten Versteifungsrippen 30, 40 ist somit ähnlich einer Vergabelung Y-förmig ausgebildet. In diesem Bereich weisen die ersten

Versteifungsrippen 30 eine Verdickung 44 auf. In Richtung der Sattelspitze 18 ist eine weitere Verzweigung 46 ausgebildet. Hierdurch geht die Verdickung 44 in zweite Versteifungsrippen 48 über. Die zweiten Versteifungsrippen 48, die nach innen verlaufen, sind sodann Y-förmig zusammengeführt, so dass ein etwa doppelt so breiter Bereich 50 in der zweiten Versteifungsrippe 48 realisiert ist.

Freie Enden 52, 54 der Versteifungsrippen 40, 50 gehen vorzugsweise stufenfrei in die Sattel-Unterseite 28 über.

Eine weitere Besonderheit besteht in den Ausläufen 54 der dritten Versteifungsrippen 40, da diese in nach unten ausgeformte Ausbuchtungen 56 (Fig. 3) der Sattelschale 10 übergehen. Die Ausbuchtungen 56 sind im Bereich der Sitzhöcker eines Benutzers angeordnet. Die Sitzhöcker drücken auf das Sitzpolster, wie in Fig. 3 durch die Pfeile 58 dargestellt. Durch die Ausbuchtungen 56 kann bei hoher Eigenflexibilität der Sattelschale 10 eine fließende stufenfreie Krafteinleitung in die Sattelschale erfolgen. Zu berücksichtigen ist hierbei, dass ein Großteil der auftretenden Kräfte jedoch über die hinteren Aufnahmen 24 sowie das vordere Aufnahmeelement 20 eingeleitet werden.

## Patentansprüche

1. Fahrradsattel, insbesondere Sport-Fahrradsattel, mit
einer ein verbreitertes Sitzteil (36) und ein schmales Vorderteil (38) aufweisenden Sattelschale (10),
einem an einer Schalen-Oberseite (12) angeordneten Sitzelement (14),
einem im Bereich einer Sattelspitze (18) an der Sattelschale (10) vorgesehenen vorderen Aufnahmeelement (20) zur Verbindung mit einem Sattelgestell,
einem im Bereich einer Sattelrückseite (22) an der Sattelschale (10) vorgesehenen hinteren Aufnahmeelement (24) zur Verbindung mit dem Sattelgestell,
an einer Sattel-Unterseite (28) vorgesehene Versteifungsrippen (30, 40, 48), und erste Versteifungsrippen (30), die von dem hinteren Aufnahmeelement (24) zum vorderen Aufnahmeelement (20) verlaufen
**dadurch gekennzeichnet, dass**
sich von einem Übergangsbereich (37) zwischen dem Sitzteil (36) und dem Vorderteil (38) zweite Versteifungsrippen (48) in den Vorderteil (38) erstrecken.

2. Fahrradsattel nach Anspruch 1, **dadurch gekennzeichnet, dass** die Versteifungsrippen (30, 40, 48) im Wesentlichen in Richtung der Krafteinleitung in die Sattelschale (10) verlaufen.

3. Fahrradsattel nach Anspruch 1 bis 2, **dadurch gekennzeichnet, dass** die ersten Versteifungsrippen (30) in einem im Wesentlichen konstanten Abstand zu einer Schalenaußenkante (34) verlaufen.

4. Fahrradsattel nach einem der Ansprüche 1 bis 3, **dadurch gekennzeichnet, dass** das hintere Aufnahmeelement zwei Aufnahmen (24) aufweist, wobei vorzugsweise jeweils eine Versteifungsrippe (30) von jeder Aufnahme (24) zum vorderen Aufnahmeelement (20) verläuft.

5. Fahrradsattel nach einem der Ansprüche 1 bis 4, **gekennzeichnet durch** dritte Versteifungsrippen (40), die zumindest teilweise im Übergangsbereich (37) zwischen dem Sitzteil (36) und dem Vorderteil (38) angeordnet sind und vorzugsweise im Wesentlichen in Sattellängsrichtung (32) verlaufen.

6. Fahrradsattel nach Anspruch 5, **dadurch gekennzeichnet, dass** die dritten Versteifungsrippen (40) im Übergangsbereich (37) mit den ersten Versteifungsrippen (30) zusammengeführt sind.

7. Fahrradsattel nach einem der Ansprüche 1 bis 6, **dadurch gekennzeichnet, dass** zwei zweite Versteifungsrippen (48) zu einer gemeinsamen Versteifungsrippe (50) zusammengeführt sind, die sich, bezogen auf eine Sattelbreite, in der Mitte befindet.

8. Fahrradsattel nach einem der Ansprüche 1 bis 7, **dadurch gekennzeichnet, dass** die zweiten Versteifungsrippen (48) mit den ersten Versteifungsrippen (30) zusammengeführt sind.

9. Fahrradsattel nach einem der Ansprüche 1 bis 8, **dadurch gekennzeichnet, dass** die ersten Versteifungsrippen (30) im Bereich der Zusammenführung (42, 46) mit den jeweils zweiten Versteifungsrippen (48) und/oder dritten Versteifungsrippen (40) verdickt ausgebildet sind.

10. Fahrradsattel nach Anspruch 9, **dadurch gekennzeichnet, dass** sich die Verdickung (44) von der Zusammenführung (42) mit der jeweils zweiten Versteifungsrippe (48) zur Zusammenführung (46) mit der jeweils dritten Versteifungsrippe (40) erstreckt.

11. Fahrradsattel nach einem der Ansprüche 1 bis 10, **dadurch gekennzeichnet, dass** freie Rippenenden (52, 54) stufenlos in die Sattel-Unterseite (28) übergehen.

12. Fahrradsattel nach einem der Ansprüche 1 bis 11, **gekennzeichnet durch** an der Sattel-Unterseite (28) vorgesehene Ausbuchtungen (56) im Bereich einer Sitzhöckerauflage.

13. Fahrradsattel nach Anspruch 12, **dadurch gekennzeichnet, dass** die dritten Versteifungsrippen (40) in die Ausbuchtungen (56) übergehen.

14. Fahrradsattel nach einem der Ansprüche 1 bis 13, **gekennzeichnet durch** einen an der Sattel-Rückseite (22) angeordneten, insbesondere von der Schalen-Unterseite (28) sich nach unten erstreckenden Versteifungsrand (25).

15. Fahrradsattel nach Anspruch 14, **dadurch gekennzeichnet, dass** das hintere Aufnahmeelement (24) mit dem Versteifungsrand (25) verbunden ist.

## Claims

1. A bicycle saddle, in particular a bicycle sports saddle, comprising
a saddle shell (10) with an enlarged seat portion (36) and a narrow front portion (38),
a seat element (14) arranged on a top side (12) of the shell,
a front receiving element (20) for connection with a saddle frame, the element being provided in the region of a saddle tip (18) at the saddle shell (10), and
a rear receiving element (24) for connection with the saddle frame, the element being provided in the region of the rear side (22) of the saddle at the saddle shell (10), and
reinforcing ribs (30, 40, 48) provided on the lower side (28) of the saddle, and first reinforcing ribs (30) extending from the rear receiving element (24) to the front receiving element (20),
**characterized in that**
second reinforcing ribs (48) extend into the front portion (38) from a transition zone (37) between the seat portion (36) and the front portion (38).

2. The bicycle saddle of claim 1, **characterized in that** the reinforcing ribs (30, 40, 48) extend substantially in the direction of force induction into the saddle shell (10).

3. The bicycle saddle of claims 1 to 2, **characterized in that** the first reinforcing ribs (30) extend at a substantially constant distance from an outer edge (34) of the shell.

4. The bicycle saddle of one of claims 1 to 3, **characterized in that** the rear receiving element comprises two receptacles (24), a respective reinforcing rib (30) extending from each receptacle (24) to the front receiving element (20).

5. The bicycle saddle of one of claims 1 to 4, **characterized by** third reinforcing ribs (40) that are arranged at least in part in the transition zone (37) between the seat potion (36) and the front portion (38) and preferably extend substantially in the longitudinal direction (32) of the saddle.

6. The bicycle saddle of claim 5, **characterized in that** the third reinforcing ribs (40) merge with the first reinforcing ribs (30) in the transition zone (37).

7. The bicycle saddle of one of claims 1 to 6, **characterized in that** two second reinforcing ribs (48) merge into a combined reinforcing rib (50) located in the centre with respect to the width of the saddle.

8. The bicycle saddle of one of claims 1 to 7, **characterized in that** the second reinforcing ribs (48) merge with the first reinforcing ribs (30).

9. The bicycle saddle of one of claims 1 to 8, **characterized in that** the first reinforcing ribs (30) are thickened in the region of junction (42, 46) with the respective second reinforcing ribs (48) and/or third reinforcing ribs (40).

10. The bicycle saddle of claim 9, **characterized in that** the thickening (44) extends from the junction (42) with the respective second reinforcing rib (48) to the junction (46) with the respective third reinforcing rib (40).

11. The bicycle saddle of one of claims 1 to 10, **characterized in that** free rib ends (52, 54) pass smoothly into the lower side (28) of the saddle.

12. The bicycle saddle of one of claims 1 to 11, **characterized by** bulges (56) provided on the lower side (28) of the saddle in the region of the sit bone support.

13. The bicycle saddle of claim 12, **characterized in that** the third reinforcing ribs (40) pass into the bulges (56).

14. The bicycle saddle of one of claims 1 to 13, **characterized by** a reinforcing edge (25) provided at the rear side (22) of the saddle and extending in particular downward from the lower side (28) of the shell.

15. The bicycle saddle of claim 14, **characterized in that** the rear receiving element (24) is connected with the reinforcing edge (25).

## Revendications

1. Selle de vélo, en particulier selle de vélo de sport, comprenant :
une coque de selle (10) présentant une partie d'assise (36) élargie et une partie avant (38) étroite,
un élément d'assise (14) disposé sur une face supérieure (12) de la coque,
un élément de réception avant (20) prévu dans la région d'un bec de selle (18) sur la coque de selle (10) pour liaison avec une ossature de la selle,
un élément de réception arrière (24) prévu dans la région d'une face arrière (22) de la selle sur la coque de selle (10) pour liaison avec l'ossature de la selle,
des nervures de renforcement (30, 40, 48) prévues sur une face inférieure (28) de la selle, et des premières nervures de renforcement (30) qui s'étendent de l'élément de réception arrière (24) à l'élément de réception avant (20),
**caractérisée en ce que**
des secondes nervures de renforcement (48) s'étendent depuis une zone de transition (37) entre la partie d'assise (36) et la partie avant (38) jusque dans la partie avant (38).

2. Selle de vélo selon la revendication 1, **caractérisée en ce que** les nervures de renforcement (30, 40, 48) s'étendent sensiblement dans la direction de l'application des forces dans la coque de selle (10).

3. Selle de vélo selon la revendication 1 à 2, **caractérisée en ce que** les premières nervures de renforcement (30) s'étendent à une distance sensiblement constante d'un bord extérieur (34) de la coque.

4. Selle de vélo selon l'une des revendications 1 à 3, **caractérisée en ce que** l'élément de réception arrière comporte deux logements (24), de préférence une nervure de renforcement (30) s'étendant respectivement à partir de chaque logement (24) jusqu'à l'élément de réception avant (20).

5. Selle de vélo selon l'une des revendications 1 à 4, **caractérisée par** des troisièmes nervures de renforcement (40) qui sont disposées au moins en partie dans la zone de transition (37) entre la partie d'assise (36) et la partie avant (38) et s'étendent, de préférence, sensiblement dans la direction longitudinale (32) de la selle.

6. Selle de vélo selon la revendication 5, **caractérisée en ce que** les troisièmes nervures de renforcement (40) rejoignent les premières nervures de renforcement (30) dans la zone de transition (37).

7. Selle de vélo selon l'une des revendications 1 à 6, **caractérisée en ce que** deux secondes nervures de renforcement (48) fusionnent pour former une nervure de renforcement (50) commune qui, rapportée à une largeur de selle, est située au centre.

8. Selle de vélo selon l'une des revendications 1 à 7, **caractérisée en ce que** les secondes nervures de renforcement (48) rejoignent les premières nervures de renforcement (30).

9. Selle de vélo selon l'une des revendications 1 à 8, **caractérisée en ce que** les premières nervures de renforcement (30) sont épaissies dans la zone de la jonction (42, 46) avec respectivement les secondes nervures de renforcement (40) et/ou les troisièmes nervures de renforcement (48).

10. Selle de vélo selon la revendication 9, **caractérisée en ce que** l'épaississement (44) s'étend de la jonction (42) avec la seconde nervure de renforcement (40) respective à la jonction (46) avec la troisième nervure de renforcement (48) respective.

11. Selle de vélo selon l'une des revendications 1 à 10, **caractérisée en ce que** des extrémités de nervure libres (52, 54) se fondent de manière continue dans la face inférieure (28) de la selle.

12. Selle de vélo selon l'une des revendications 1 à 11, **caractérisée par** des évidements (56) prévus sur la face inférieure (28) de la selle dans la zone d'un appui des ischions.

13. Selle de vélo selon la revendication 12, **caractérisée en ce que** les troisièmes nervures de renforcement (40) se fondent dans les évidements (56).

14. Selle de vélo selon l'une des revendications 1 à 13, **caractérisée par** un bord de renforcement (25) disposé dans la face arrière (22) de la selle, s'étendant en particulier à partir de la face inférieure (28) de la coque vers le bas.

15. Selle de vélo selon la revendication 14, **caractérisée en ce que** l'élément de réception arrière (24) est raccordé au bord de renforcement (25).
